# FASCICULE DE BREVET EUROPEEN

(11) **EP 0 427 736 B1**
(45) Date de publication et mention de la délivrance du brevet: **05.05.1993**
(21) Numéro de dépôt: 89907185.6
(22) Date de dépôt: 07.06.1989
(51) Int. Cl.: E03B 7/12

(54) **APPAREIL THERMOSTATIQUE A INTERCALER DANS UNE CANALISATION DE LIQUIDE**
THERMOSTATISCHE VORRICHTUNG, EINGEBAUT IN EINEM FLÜSSIGKEITSROHR
THERMOSTATIC DEVICE FOR INSERTION IN A LIQUID PIPELINE

(30) Priorité: 09.06.1988 FR 8807704
(43) Date de publication de la demande: 22.05.1991
(73) Titulaire: Debeaux, Michel, F-21000 Dijon (FR)
(72) Inventeur: Debeaux, Michel, F-21000 Dijon (FR)
(74) Mandataire: Bruder, Michel
(86) Numéro de dépôt international: FR8900287
(87) Numéro de publication internationale: WO8912147

(56) Documents cités:
- EP-A- 0 074 867
- FR-A- 1 499 696
- GB-A- 2 117 436
- US-A- 4 460 006
- US-A- 4 557 252

## Description

La présente invention concerne un appareil thermostatique à intercaler dans une canalisation de liquide tel que de l'eau domestique par exemple, destiné à éviter la détérioration de ladite canalisation sous l'effet du gel en n'évacuant de celle-ci que la quantité de liquide ayant atteint les conditions de cristallisation.

On connaît bien les effets classiques du gel sur des canalisations d'eau extérieures non protégées ainsi que les moyens pour éviter leur détérioration : généralement, on s'arrange pour enterrer le robinet général d'alimentation dans une fosse, à une profondeur suffisante, pour éviter qu'il ne gèle ; ainsi, lorsque l'on prévoit une chute de température importante, il est prudent de fermer le robinet en question d'une part, et d'ouvrir parallèlement une purge généralement située à côté du même robinet au point le plus bas de toute la canalisation alimentée par ledit robinet, de manière à évacuer toute l'eau pouvant séjourner dans la canalisation. Ceci suppose, d'une part, de veiller en permanence aux conditions climatiques, et, d'autre part, de se trouver sur place pour effectuer les manoeuvres indiquées ci-dessus, ce qui n'est pas toujours possible et, peut entraîner des dégâts souvent irréparables.

Par ailleurs, on peut également remarquer qu'on hesite souvent à effectuer de telles manoeuvres, d'une part, en raison des difficultés d'accès aux appareils aggravées du fait de conditions climatiques extérieures souvent rigoureuses, et, d'autre part, en raison de la perte d'eau que supposent de telles opérations , puisque, ce faisant, on vide intégralité des canalisations qu'on veut protéger.

On connaît bien d'autres méthodes habituelles pour éviter de tels inconvénients, consistant à laisser par exemple couler un filet d'eau à partir d'un robinet judicieusement placé dans l'installation permettant de retarder les conditions de cristallisation, et plus tard, de changement d'état conduisant à la congélation de l'eau, responsable, on le sait, des ruptures de canalisation en raison de l'augmentation de volume de l'eau congelée à l'état de glace ; on sait en effet qu'une circulation d'eau dans les canalisations, même très lente, amène régulièrement suffisamment de calories pour éviter la formation de glace dans les canalisations et donc leur rupture ; l'inconvénient de cette solution est la perte d'eau, qui peut être importante, et par conséquent le coût que peut représenter une telle protection.

C'est pourquoi on a proposé un certain nombre de solutions pour protéger de manière automatique les canalisations de liquide, et par exemple les canalisations d'eau domestique ; on connaît dans ce sens, le brevet US-A-4 460 006 au nom de KOLZE, qui propose un dispositif de protection de canalisation contre le gel, consistant en une valve automatique qui permet d'éjecter une quantité d'eau suffisante, dès lors que les conditions de cristallisation sont très proche d'être atteintes : ce dispositif se caractérise par un ensemble mobile relativement compliqué, permettant d'ouvrir ou fermer un trou de purge ; le dispositif comprend en effet une soupape maintenue en appui élastique sur son siège par un premier ressort, son ouverture étant obtenue par le pied d'une coupelle de forme complexe, susceptible d'être relevée par l'action d'un second ressort lorsque la tige d'un piston se déplace sous l'effet de l'expansion allotropique d'une cire contenue dans un cylindre repoussé à l'intérieur d'une double cage, elle-même rappelée par un troisième ressort de rappel dont la force de compression est supérieure à la force de compression antagoniste du second ressort, permettant de soulever la soupape.

Un tel mécanisme ne prévoit aucun lien rigide entre ¡a tige du piston et le siège de la soupape ,qui vient obturer l'orifice de purge ; il ressort, en conséquence, que ce dispositif fort complexe ne peut fonctionner qu'à l'aide de trois ressorts antagonistes dont tous ¡es effets sont nécessaires pour obtenir le résultat escompté ; par ailleurs, l'ensemble des jeux mécaniques du à l'empilage des diverses pièces mécaniques, coupelle et cage, dans lesquelles se meuvent les pièces mobiles, constitue incontestablement des causes importantes de grippage, ce qui ne contribue ras précisément à la fiabilité du système qui, en outre, ne peut être que fort coûteux du point de vue fabrication et reste très aléatoire pour ce qui concerne le réglage de l'ensemble du mécanisme.

Pour pallier notamment ces inconvénients, il est proposé, suivant l'invention, une solution plus directe et plus fiable permettant de protéger les canalisations de liquide, et notamment les canalisations d'eau potable, par un appareil thermostatique permettant d'évacuer les portions de canalisations dans lesquelles le liquide a atteint les conditions de cristallisation, sans toutefois attendre que le même liquide ait libéré la totalité de sa chaleur latente, le faisant passer de l'état liquide à l'état solide responsable, on le sait, de la rupture des canalisations ; pour ce faire, on a prévu un appareil thermostatique à intercaler dans une canalisation de liquide susceptible de n'évacuer que la quantité de liquide ayant atteint les conditions de cristallisation, par le moyen d'une purge de vidange telle que le clapet de la purge de vidange, normalement ouvert sous l'effet d'un ressort de rappel, soit repoussé sur son siège en position de fermeture sous la pression de la tige d'un piston actionné par un cylindre, en contact direct avec le liquide dont on surveille les conditions de cristallisation ; ledit cylindre est rempli d'un corps dont la variation allotropique résultant de la température du liquide dans la canalisation est suffisante pour assurer la fermeture de la purge de vidange dès que la température du liquide est légèrement supérieure au point de congélation dudit liquide.

Outre son extrême simplicité, et par là, sa fiabilité de fonctionnement, l'appareil suivant l'invention procure naturellement l'avantage décisif à savoir que, lorsque le liquide lui-même n'apporte plus suffisamment de calories à un ensemble thermostatique le mettant, de ce fait, en état de repousser le clapet d'une purge de vidange, sur son siège de manière à obturer cette purge, alors le même clapet se trouve immédiatement relevé au moyen d'un ressort de rappel, pour évacuer sans délai vers l'extérieur la partie de liquide de la canalisation ayant atteint les conditions de cristallisation ; naturellement, l'évacuation de cette partie de liquide laisse la place à une nouvelle section de liquide dont la température est en principe supérieure, ce qui aura jour effet d'apporter les calories en nombre suffisant pour repousser le clapet sur son siège et ainsi fermer à nouveau la purge de vidange. Un tel fonctionnement s'accompagne donc d'une économie évidente de fluide puisque seules les sections ayant atteintes les conditions de gel sont évacuées au fur et à mesure que celles-ci se constituent.

On peut aussi souhaiter, pour combattre les effets du gel dans une canalisation, que celle-ci soit, au moment opportun, tout simplement obturée, pour éviter qu'aux effets du gel s'ajoute encore la perte de liquide sous pression. On a donc proposé, suivant une autre caractéristique de l'invention, une robinetterie thermostatée dont la fermeture est obtenue dès que la température du liquide dans la canalisation a atteint ou passe en dessous d'un seuil prédéterminé ; cette robinetterie thermostatique est caractérisée en ce qu'elle comporte un coussinet de forme avantageusement tronconique, monté coaxialement à l'intérieur de la canalisation à protéger, de telle manière qu'il soit normalement en appui sur un siège coaxial, solidaire de ladite canalisation, grâce à la compression axiale d'un ressort dont la force de rappel est supérieure à la pression antagoniste du liquide, mais inférieure à la poussée axiale et antagoniste d'un piston sur ledit coussinet, poussée qui est obtenue à partir de la variation allotropique, due à l'élévation de la température du liquide à partir de la valeur du seuil prédéterminée, d'un corps disposé à l'intérieur d'un cylindre actionnant ledit piston, ledit cylindre étant maintenu au contact et dans l'axe du flux de la canalisation.

Dès lors, on comprend qu'en dessous d'une valeur prédéterminée de la température du liquide à l'intérieur de la canalisation, un coussinet peut être plaqué sur son siège par le moyen d'un ressort justement taré à une force supérieure à la pression antagoniste du liquide, de manière à obturer la canalisation du moins jusqu'à ce que la température du même liquide redevienne supérieure à la valeur du seuil prédéterminée, provoquant, par la variation allotropique du corps dans le cylindre, le recul dudit coussinet et finalement l'ouverture de la canalisation ; il est bien évident que cette valeur prédéterminée de la température de réaction du cylindre est choisie de telle manière que lorsque la pression est rétablie dans la canalisation, celle-ci ne soit pas dans des conditions de geler.

Suivant une dernière caractéristique de l'invention, on réunit en un seul les deux appareils thermostatiques précédents, de manière à les faire fonctionner pour une protection totale d'une'canalisation transportant des liquides en situation de geler.

Pour cela, on réalise un ensemble conforme aux descriptions précédentes comprenant, du côté amont de la canalisation, un robinet thermostatique, suivi en aval d'une purge thermostatée ; l'ensemble ainsi constitué se caractérise par le fait que l'action de fermeture obtenue par la robinetterie thermostatée en amont s'effectue à une température supérieure à la température prévue pour l'ouverture du clapet de la purge de vidange permettant à la canalisation qu'on veut protéger d'évacuer tout son contenu.

De cette manière, l'ensemble robinetterie et purgeur thermostaté, permet d'obturer l'arrivée de fluide en un point quelconque de la canalisation et ce, à compter d'une température extérieure que l'on peut prédéterminer ; lorsque les conditions climatiques sont voisines des conditions idéales de gel, aux environs de 1° Celsius dans le cas de l'eau, alors la purge thermostatique s'ouvre et permet de vidanger le liquide, tel que de l'eau, contenu dans .la canalisation préalablement isolée par le robinet thermostatique, sous réserve toutefois d'avoir prévu en un autre point de cette canalisation une purge du même type, dont l'ouverture déclenche l'écoulement souhaité.

On comprendra mieux le fonctionnement et les avantages qui ressortent de tels appareils thermostatiques par la description qui va suivre d'un mode de réalisation donné à titre d'exemple, préféré, bien que non limitatif de l'invention, en référence aux dessins annexés dans lesquels :
- la figure 1 est une vue verticale d'une purge de vidange thermostatique suivant l'invention, présentant une demi-vue en coupe axiale du mécanisme thermostaté.
- la figure 2 est une vue en coupe axiale et verticale d'une robinetterie thermostatique suivant l'invention.
- la figure 3 est en vue en coupe axiale et verticale d'un ensemble comportant une robinetterie thermostatée en série avec un purgeur thermostaté suivant l'invention.
- la figure 4 est un schéma montrant un exemple de montage type pour la protection d'une canalisation contre le gel.

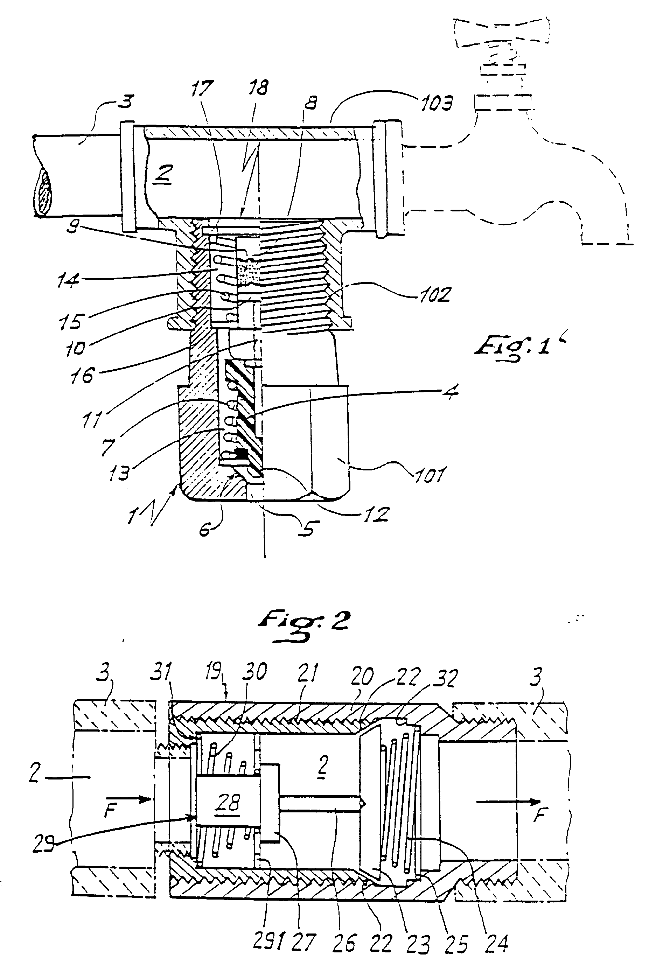

L'appareil thermostatique 1 conforme à la figure 1 est destiné à lutter contre les effets du gel d'un liquide 2 dans une canalisation 3. Dans la description qui va suivre on considérera que le liquide est constitué par de l'eau dont le point de congélation est de 0° C à la pression atmosphérique mais il va de soi que l'appareil suivant l'invention pourrait être utilisé avec d'autres liquides ayant des points de congélation différents. L'appareil suivant l'invention intervient de telle façon que dès que la température de l'eau s'abaisse à une valeur égale ou inférieure à un degré Celsius, un clapet 4 d'une purge de vidange 5 de la canalisation 3 est relevé de son siège 6 par le moyen d'un ressort de rappel 7 convenablement taré, laissant ainsi s'échapper la partie de l'eau 2 ayant atteint les conditions de cristallisation sans attendre que l'eau 2 ait libéré toute sa chaleur latente qui la ferait passer de l'état liquide à l'état de glace responsable des détériorations. Parallèlement, l'eau 2, ainsi évacuée, est remplacée dans la canalisation 3 par un nouvel apport d'eau 2 dont la température est en principe supérieure puisqu'elle provient du réseau de distribution qui est normalement protégé ; cet apport contribue à refermer le clapet 4 de la purge de vidange 5 en attente d'une éventuelle nouvelle baisse de température qui déclenchera un nouveau cycle d'évacuation de la partie de l'eau 2 ayant atteint les conditions de cristallisation.

De cette façon, il ressort bien que seules les parties de l'eau 2 présentant un risque de gélification sont évacuées, ce qui procure une économie substantielle de cette même eau 2 .

Suivant l'invention, le clapet 4 est commandé par l'action d'un cylindre B rempli d'un corps 9 dont les variations allotropiques en fonction de la température sont recueillies sur un piston 10 déterminant le déplacement longitudinal d'une tige 11, qui est encastrée au centre et dans l'axe du clapet 4. Ce même clapet 4 est en forme générale d'obus dont le nez 12, en combinaison avec la portée du siège 6, constitue la soupape de la purge de vidange 5 de la canalisation 3.

Le clapet 4, monté dans l'appareil 1 à l'intérieur d'une première chambre cylindrique 13, communiquant avec la canalisation 3 est maintenu d'une manière connue par un ressort de compression 7, repoussant normalement ledit clapet 4 hors du siège de fermeture 6 de la purge 5.

Inversement, lorsque la température de l'eau 2 est supérieure à un degré Celsius, l'expansion volumique du corps 9 contenu dans le cylindre 8 qui "baigne" totalement dans l'eau 2, a pour effet de repousser, au moyen du piston 10, la tige de commande 11, qui vient à son tour repousser le clapet 4 sur son siège 6 en comprimant le ressort 7, pour finalement obturer la purge de vidange 5 devenue inutile, puisque l'eau 2 est "hors gel".

Suivant une caractéristique secondaire de l'invention, il est prévu un dispositif complémentaire associé à la purge thermostatée qui vient d'être décrite, permettant un fonctionnement correct et fiable de l'ensemble à toute condition de température positive de l'eau 2. En effet il va de soi qu'au delà d'un degré Celsius, le corps 9 continue de se dilater en fonction de l'élévation de température de l'eau 2 avec la conséquence d'un allongement corrélatif de la tige 11 ; comme, par hypothèse, le clapet 4 est en appui sur son siège 6, dès que la température du fluide 2 atteint un degré Celsius, la course de la tige 11 est alors bloquée vers le bas, et il devient nécessaire de pouvoir libérer les allongements, ce qui est réalisé par le déplacement du cylindre 8 vers le haut ; à cet effet, le cylindre 8, monté dans une deuxième chambre cylindrique 14 coaxiale avec la première chambre 13, toutes deux communiquantes avec le fluide 2, est maintenu jar un ressort de compression 15, dont la force de compression est supérieure à celle du ressort de rappel 7 du clapet 4, dans une position d'appui positif sur le rebord inférieur 16 de la chambre 14 avantageusement constitué par la différence de diamètre de la chambre 13 et de la chambre 14. Le ressort 15 vient par ailleurs en appui supérieur sur une bague élastique amovible 17, par exemple du type connu commercialement sous le nom de "circlip", assurant, en outre, la communication de l'ensemble avec la canalisation 3, tout en assurant, le cas échéant, une zone de dégagement centrale 18 pour le passage du cylindre 8.

Suivant ce montage, on comprend parfaitement que le cylindre 8, durant les périodes de gel (température de l'eau 2 égale ou inférieure à un degré Celsius), soit totalement fixe, en appui sur le rebord 16, le clapet 4 s'ouvrant et se fermant au rythme des purgations successives de l'eau 2 ayant atteint les conditions de cristallisation, et qu'inversement, (lorsque la température de l'eau est supérieure à un degré Celsius), le clapet 4 est immobilisé sur son siège de fermeture 6, alors que le cylindre 8 se déplace dans la chambre 14 en comprimant le ressort 15 qui contribue à son rappel dès que la température de l'eau 2 chute à nouveau.

On comprend mieux, maintenant, tout l'intérêt du dispositif 1 suivant l'invention, dont les avantages sont encore accrus, d'une manière inattendue, grâce à son montage particulier et nouveau sur la canalisation 3 à protéger ; en effet, l'équipement thermostaté qui vient d'être décrit est logé à l'intérieur d'une enveloppe unique 101, à l'intérieur de laquelle sont usinés, de façon habituelle, la purge 5, le siège 6, les chambres coaxiales 13 et 14, le rebord 16 et la rainure 171 destinée à recevoir la bague élastique 17. Extérieurement, le dispositif 1 est muni en partie haute d'un filetage habituel 102 permettant d'intercaler le dispositif 1, par l'intermédiaire d'un raccord classique en T 103 ; la partie inférieure de l'enveloppe 101 est munie d'une tête de boulon 104 permettant de façon classique le montage de l'ensemble 1 sur le raccord en T 103.

On notera qu'un tel montage présente un autre avantage encore, en ce qu'il n'obstrue en aucune façon la section de la canalisation 3, qui n'est donc pas perturbée dans son débit.

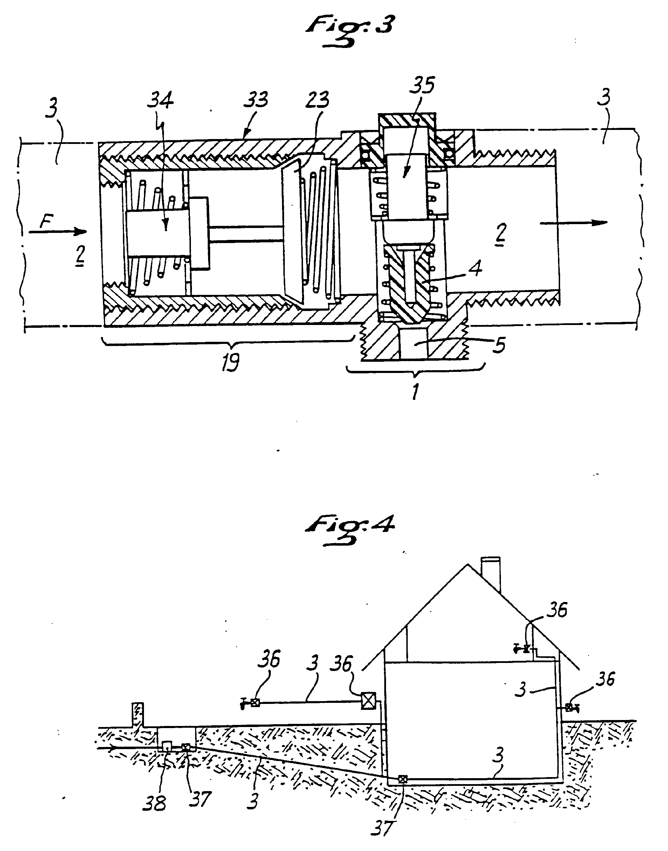

Le robinet thermostatique 19 suivant l'invention, représenté schématiquement sur la figure 2, est particulièrement bien adapté à tous les cas où l'on veut obturer une canalisation 3 de liquide 2 lorsque la température de ce dernier a atteint une valeur de seuil prédéterminée To, et ce pendant toute la période où la température du fluide sera indentique ou inférieure à ce seuil To.

Le robinet 19 peut être intercalé, en série, dans toute canalisation 3 que l'on souhaite protéger, par le moyen connu de raccords classiques à filetages intérieurs ou extérieurs. Le robinet 19 comporte une enveloppe extérieure 20, en forme générale de cylindre creux, à l'intérieur de laquelle est montée vissée une chemise 21 de moindre longueur que l'enveloppe extérieure 20 ; l'extrémité droite de la chemise 21 est usinée intérieurement de manière à réaliser une portée de forme tronconique formant un siège 22 pour recevoir le coussinet 23 du robinet thermostatique 19, susceptible d'obturer totalement la canalisation 3 pour le transport d'un liquide 2 sous pression dans le sens F de la figure 2. Le coussinet 23, de forme tronconique, est normalement repoussé sur son siège 22 par l'extension d'un ressort de compression 24 s'appuyant sur un lamage 25 de l'enveloppe extérieure 20.

La pression du ressort 25 sur le coussinet 23 est choisie nettement supérieure à la pression antagoniste du fluide dans la canalisation 3 ; par exemple, si la pression du fluide est de 6 bars, on choisira un ressort 25 procurant une pression de 8 bars sur le coussinet 23. On comprend bien qu'un tel montage nécessite d'apporter une pression complémentaire à la pression naturelle du liquide 2 pour obtenir l'ouverture du coussinet 23 et, permettre le transport ou la distribution du liquide 2 dans la canalisation 3. Cette pression complémentaire est obtenue par la poussée de la tige 26 d'un piston 27 au centre du coussinet 23 résultant de la variation allotropique d'un corps 28, à l'intérieur d'un cylindre 29, sous l'effet de la température du liquide 2 environnant ledit cylindre 29 ; ce dernier est, par ailleurs, maintenu centré à l'intérieur de la chemise 21 par une rondelle 291 de positionnement et de guidage pouvant coulisser librement sur la surface interne de la chemise 21 ; un ressort de compression 30 convenablement taré vient, enfin, maintenir l'ensemble cylindre/piston/tige 29,27,26 constamment en appui positif sur le coussinet 23 de sorte que celui-ci trouve à tout instant une position d'équilibre des forces antagonistes en présence résultant de la compression des deux ressorts 24 et 30 d'une part, et de la pression du liquide 2 d'autre part. On notera à cet égard que le ressort 30 qui trouve sa référence d'appui sur un lamage 31 prévu en tête de la chemise 21, est tel que sa force de compression est toujours supérieure à celle du ressort de rappel 24 du coussinet 23.

De cette manière, il apparaît bien que le ressort 24 est toujours sollicité en premier, du moins dans la plage normale de fonctionnement du robinet 19 qui va être maintenant décrite : à la température To prédéterminée pour la fermeture du robinet 19, le cylindre 29 n'exerce plus de poussée sur le coussinet 23 par l'intermédiaire du piston 27 et de sa tige 26, en raison de la contraction volumique du corps 28 à l'intérieur du cylindre 29.

Le coussinet 23 est alors contraint sur son siège 22 par le ressort 24 et la canalisation 3 est totalement obturée, tant que la température du fluide 2 reste identique ou inférieure à To ; en revanche, dès que la température dépasse la valeur To, l'expansion volumique du corps 28 à l'intérieur du cylindre 29 repousse la tige 26 du piston 27 sur le coussinet 23 qui, de ce fait, quitte son siège 22 et ouvre le passage du fluide 2 dans la canalisation 3. On a naturellement prévu un déplacement maximal du coussinet 23 qui viendrait en butée sur un lamage 32 de l'enveloppe extérieure 20, en cas d'échauffement important du liquide 2 qui se traduirait par un allongement sensible de la tige 26 en raison de l'expansion du corps 28 à l'intérieur du cylindre 29.

Dès que le coussinet 23 se trouve en butée, interdisant tout allongement supplémentaire de la tige 26, le recul du cylindre 29 est rendu possible par le coulissement de la rondelle de centrage 291 et la compression du ressort 30 qui sert au rappel de l'ensemble dès que la température du liquide 2 tend à redescendre.

On notera enfin que les corps 9 et 28 utilisables respectivement dans les cylindres 8 et 29 de la purge et du robinet thermostatique suivant l'invention peuvent être constitués par de la cire ou de l'huile dont on connaît bien les variations allotropiques en fonction de !a température et que l'on choisit en raison des seuls impératifs de montage mécanique, ou de plage de réglage.

Suivant une dernière caractéristique de l'Invention, l'appareil 33 représenté sur la figure 3, est particulièrement destiné à la protection de canalisations de fluide contre le gel, en automatisant les opérations habituellement manuelles de vidange complète desdites canalisations qui peuvent se résumer ainsi : fermeture de l'arrivée du liquide, ouverture d'une purge au point le plus bas de l'installation et ouverture de toutes les robinetteries pour évacuer le contenu des canalisations.

A cet effet, l'appareil 33 est réalisé à partir d'une association d'un robinet thermostatique 19 tel que représenté sur la figure 2 et d'une purge thermostatique 1 telle que décrite plus haut, montés dans un boîtier unique sur une canalisation 3 à protéger du gel, de telle manière que le liquide 2 passe d'abord dans la partie de l'appareil 33 comportant le robinet 19 et ensuite dans la partie comportant la purge 1 avant de ressortir dans la canalisation 3.

Il va de soi que les deux sous-ensembles constituant l'appareil 33 sont en tout point conformes aux descriptions techniques développées plus haut ; toutefois le cylindre 34 est choisi de telle manière que le coussinet de fermeture 23 obture la canalisation dès que la température du fluide 2 atteint le seuil To supérieur d'un degré Celsius à la température choisie pour amener le cylindre 35 à commander l'ouverture de la purge 5.

Ainsi, lorsque la température du fluide 2 baisse et au'elle atteint une valeur de deux degrés Celsius, la canalisation est automatiquement obturée ; si la température du liquide 2 continue de chuter, la purge de vidange s'ouvre aux environs de un degré Celsius autorisant l'écoulement du liquide 2 situé en aval dans la canalisation 3, pour autant qu'on ait prévu une prise d'air ; celle-ci sera avantageusement obtenue par l'usage d'une purge thermostatique conforme à l'invention, réglée à un degré Celsius et disposée à la sortie, au plus haut de la canalisation 3.

On a rassemblé à titre d'illustration, sur la figure 4 quelques montages types de purges 36 et de robinets thermostatiques munis de purges 37 dans une installation domestique d'eau potable à partir d'un compteur 38.

## Revendications

1. Dispositif thermostatique (1, 19) à intercaler dans une canalisation (3) de liquide (2), destiné à éviter la détérioration de ladite canalisation (3) sous l'effet du gel en n'évacuant que la quantité de liquide (2) ayant atteint les conditions de cristallisation, caractérisé en ce que les moyens de réaction à la température du liquide (2) comportent un cylindre (8, 28) coulissant axialement et librement à l'intérieur d'un logement, formé de deux chambres (13) et (14) coaxiales, de telle manière que la tige (11, 26) d'un piston (10, 27), actionnée par la variation allotropique d'un corps (9, 29) contenu à l'intérieur dudit cylindre (8, 28) soit maintenue en appui direct et constant sur le clapet (4, 23), grâce à un premier ressort (15, 30) dont la force de compression est supérieure à celle d'un second ressort de rappel (7, 24) dudit clapet (4, 23), le second ressort (7, 24) étant monté de manière antagoniste avec le premier ressort (15, 30) tendant à repousser l'ensemble cylindre (8, 28)/clapet (4, 23) soit pour absorber les variations d'allongement de la tige (11, 26) dudit piston (10, 27) résultant d'une modification de température du liquide (2) au dessus de sa température de cristallisation, soit pour éliminer tous les jeux en-dessous de cette même température.

2. Dispositif thermostatique (1) selon la revendication 1 à incorporer dans une canalisation (3) en vue de sa purge dès que le liquide (2) a atteint un seuil prédéterminée de température, caractérisé en ce que son montage mécanique sur la canalisation (3) est telle que la direction du déplacement du clapet (4) de purge (5) soit perpendiculaire à la direction d'écoulement du liquide (2) dans la canalisation (3).

3. Dispositif thermostatique (1) selon la revendication 2 caractérisé en ce que le clapet (4) de la purge de vidange (5) est une pièce en forme générale d'obus dont le nez (12), en combinaison avec la portée du siège (5), constitue la soupape de ladite purge (5) de la canalisation (3).

4. Dispositif thermostatique (19) à incorporer dans une canalisation (3) de liquide (2) en vue de son obturation lorsque la température dudit liquide (2) atteint ou passe au-dessous d'un seuil prédéterminée selon la revendication 1, caractérisé en ce qu'il comporte un clapet (23) de forme avantageusement tronconique monté axialement à l'intérieur de ladite canalisation (3), de telle manière qu'il soit normalement en appui sur un siège (22) solidaire et coaxiale de ladite canalisation (3) grâce à la compression axiale du ressort spiralé (24) dont la force est supérieure à la pression antagoniste du liquide (2) mais inférieure à la poussée axiale et antagoniste d'un piston (27) sur ledit clapet (23).

5. Dispositif thermostatique (1) selon la revendication 4 caractérisé en ce que le cylindre (29) peut coulisser dans l'axe de la canalisation (3) en étant centré sur une rondelle (291), de même diamètre que le diamètre intérieur de la canalisation (3) maintenue par un ressort (30) dont la compression antagoniste est supérieure à celle du ressort de rappel (24) du clapet (23), soit pour absorber tous les allongements de la tige (26) du piston (27) au-dessus du seuil de température prédéterminée du liquide (2), soit pour éliminer tous les jeux entre les pièces en mouvement en-dessous de ce seuil.

6. Dispositif thermostatique (1) conforme à l'une quelconque des revendications 1 à 5, caractérisé en ce que les corps (9, 28) contenus dans les cylindres d'obturation (29, 34) ou de purge (8, 35) peuvent être indifféremment de la cire, de l'huile ou une combinaison des deux.

7. Ensemble thermostatique à intercaler dans une canalisation (3) de liquide (2) destiné à éviter la détérioration de ladite canalisation (3) sous l'effet du gel, en n'évacuant que la quantité de liquide (2) ayant atteint les conditions de cristallisation, caractérisé en ce qu'il comporte en succession dans la canalisation (3) suivant le sens d'écoulement du liquide (2), un dispositif (19) conforme à l'une quelconque des revendications 4 ou 5 et un dispositif (1) conforme à l'une quelconque des revendications 2 ou 3, de telle façon que le dispositif (19) obture la canalisation (3) avant que le second dispositif (1) ne vienne purger ladite canalisation (3).

## Patentansprüche

1. Thermostatische Vorrichtung (1, 19) zum Einfügen in eine Leitung (3) für Flüssigkeit (2), um die Beschädigung dieser Leitung (3) durch Einfreiren zu verhindern, indem nur diejenige Flüssigkeitsmenge (2) abgelassen wird, welche die Kristallisierungsbedingungen erreicht hat, **dadurch gekennzeichnet,** daß die auf die Temperatur der Flüssigkeit (2) reagierende Anordnung einen Zylinder (8, 28) enthält, der axial und frei in einem durch zwei koaxiale Kammern (13) und (14) gebildeten Raum derart verchiebbar ist, daß die Stange (11, 26) eines Kolbens (10, 27), der durch eine allotrope Änderung eines im Inneren des Zylinders (8, 28) enthaltenen Korpers (9, 29) betätigt wird, durch eine erste Feder (15, 30), deren Druckkraft größer ist als die einer zweiten Rückholfeder (7, 24) eines Ventilschließkörpers (4,23) direkt und dauernd in Anlage an dem Schlußkörper (4, 23) gehalten wird, daß die zweite Feder (7, 24) der ersten Feder (15, 30) entgegenwirkend angeordnet ist und dazu strebt, die Zylinder (8, 28)/Schließkörper- (4, 23) Anordnung zurückzudrücken, um Längenänderungen der Stange (11, 26) des Kolbens (10, 27), die aus einer Änderung der Temperatur der Flüssigkeit (2) oberhalb ihrer Kristallisationstemperatur resultieren, aufzunehmen und ein etwaiges Spiel unterhalb dieser Temperatur zu beseitigen.

2. Thermostatische Vorrichtung (1) nach Anspruch 1 zur Einfügung in eine Leitung (3) zu deren Entleerung sobald die Flüssigkeit (2) eine bestimmte Schwellentemperatur angenommen hat, **dadurch gekennzeichnet,** daß sie mechanisch derart in der Leitung (3) angeordnet ist, daß die Bewegungsrichtung des Schließkörpers (4) zu Entleeren (5) senkrecht zur Strömungsrichtung der Flüssigkeit (2) in der Leitung (3) verläuft.

3. Thermostatische Vorrichtung (1) nach Anspruch 2, **dadurch gekennzeichnet,** daß der Schließkörper (4) zum Entleeren des Auslasses (5) ein im wesentlichen geschoßförmiges Teil ist, dessen Nase (12) in Kombination mit der Öffnung eines Sitzes (6) das Ventil des Auslasses (5) der Leitung (3) bildet.

4. Thermostatische Vorrichtung (19) zum Einbau in eine Leitung (3) für Flüssigkeit (2) zu deren Absperrung wenn die Temperatur der Flüssigkeit (2) einen vorgegebenen Schwellenwert erreicht oder unterschreitet, nach Anspruch 1, **dadurch gekennzeichnet,** daß sie einen zweckmäßigerweise kegelstumpfförmigen Schließkörper (23) enthält, der axial im Inneren der genannten Leitung (3) so angeordnet ist, daß er normalerweise durch die axiale Kompression einer Spiralfeder (24), deren Kraft größer ist als der entgegenwirkende Druck der Flüssigkeit (2) jedoch kleiner als der entgegenwirkende axiale Druck des Kolbens (27) auf den Schließkörper (23), an einem Sitz (22) anliegt, der fest und koaxial in der genannten Leitung (3) angeordnet ist

5. Thermostatische Vorrichtung (1) nach Anspruch 4, **dadurch gekennzeichnet,** daß der Zylinder (29) in der Achse der Leitung (3) gleiten kann, wobei er durch eine Ringscheibe (291) zentriert wird, deren Durchmesser gleich dem Innendurchmesser der Leitung (3) ist und die durch eine Feder (30) gehalten wird, deren Gegendruck größer als der der Rückholfeder (24) des Schließkörpers (23) ist, sei es um alle Verlängerungen der Stange (26) des Kolbens (27) oberhalb der vorgegehenden Schwellentemperatur der Flüssigkeit (2) aufzunehmen, sei es um ein etwaiges Spiel zwischen den beweglichen Teilen unterhalb der genannten Schwelle zu beseitigen.

6. Thermostatische Vorrichtung nach einem der Ansprüches 1 bis 5, **dadurch gekennzeichnet,** daß die Körper (9, 28), die in den Zylindern zum Sperren (29, 34) oder Ablassen (8, 35) enthalten sind, Wachs, Öl oder eine Kombination hiervon sein können.

7. Thermostatische Anordnung zum Einfügen in eine Leitung (3) für Flüssigkeit (2) um die Beschädigung der Leitung (3) durch Einfrieren zu verhindern indem nur diejenige Flüssigkeitsmenge (2) abgelassen wird, die die Kristallisierungsbedingungen erreicht hat, **dadurch gekennzeichnet,** daß sie in der Leitung in Strömungsrichtung der Flüssigkeit (2) der Reihe nach eine Vorrichtung (19) nach einem der Ansprüche 4 oder 5 und eine Vorrichtung nach einem der Ansprüche 2 oder 3 enthält, so daß die Vorrichtung (19) die Leitung (3) sperrt bevor die zweite Vorrichtung (1) die Leitung (3) entleert.

## Claims

1. Thermostatic device (1, 19) for insertion in a piping (3) of liquid (2), intended to avoid deterioration of said piping (3) under the effect of freezing by evacuating only the quantity of liquid (2) having attained the conditions of crystallization, characterized in that the means for reaction to the temperature of the liquid (2) comprise a cylinder (8, 28) sliding axially and freely inside a housing, formed by two coaxial chambers (13) and (14) so that the rod (11, 26) of a piston (10, 27), actuated by the allotropic variation of a body (9, 29) contained within said cylinder (8, 28) is maintained in direct and constant abutment on the valve (4, 23), thanks to a first spring (15, 30) of which the force of compression is greater than that of a second return spring (7, 24) of said valve (4, 23), the second spring (7, 24) being mounted in antagonistic manner with the first spring (15, 30) tending to push the cylinder (8, 28)/valve (4, 23) assembly either to absorb the variations in elongation of the rod (11, 26) of said piston (10, 27) resulting from a change in temperature of the liquid (2) above its temperature of crystallization, or to eliminate all the clearances below this same temperature.

2. Thermostatic device (1) according to Claim 1 to be incorporated in a piping (3) with a view to purging thereof as soon as the liquid (2) has reached a predetermined temperature threshold, characterized in that its mechnical assembly on the piping (3) is such that the direction of displacement of the valve (4) of purge (5) is perpendicular to the direction of flow of the liquid (2) in the piping (3).

3. Thermostatic device (1) according to Claim 2, characterized in that the valve (4) of the drain purge (5) is a piece generally in the form of a shell whose nose (12), in combination with the bearing surface of the seat (5), constitutes the valve of said purge (5) of the piping (3).

4. Thermostatic device (19) to be incorporated in a piping (3) of liquid (2) with a view to obturation thereof when the temperature of said liquid (2) reaches or passes below a predetermined threshold according to Claim 1, characterized in that it comprises a valve (23) advantageously of truncated shape, mounted axially inside said piping (3), so that it is normally in abutment on a seat (22) fast and coaxial with the said piping (3) thanks to the axial compression of the spiral spring (24) whose force is greater than the antagonistic pressure of the liquid (2) but less than the axial and antagonistic thrust of a piston (27) on said valve (23).

5. Thermostatic device (1) according to Claim 4, characterized in that the cylinder (29) may slide in the axis of the piping (3), being centered on a washer (291), of the same diameter as the internal diameter of the piping (3) maintained by a spring (30) of which the antagonistic compression is greater than that of the return spring (24) of the valve (23), either to absorb all the elongations of the rod (26) of the piston (27) above the predetermined temperature threshold of the liquid (2), or to eliminate all the clearances between the pieces in movement below this threshold.

6. Thermostatic device (1) according to any one of Claims 1 to 5, characterized in that the bodies (9, 28) contained in the obturation cylinders (29, 34) or of purge (8, 35) may equally well be wax, oil or a combination of the two.

7. Thermostatic assembly to be inserted in a piping (3) of liquid (2) intended to avoid deterioration of said piping (3) under the effect of freezing, by evacuating only the quantity of liquid (2) having attained the conditions of crystallization, characterized in that it comprises in succession in the piping (3) in the direction of flow of the liquid (2), a device (19) according to either one of Claims 4 or 5 and a device (1) according to either one of Claims 2 or 3, so that the device (19) obturates the piping (3) before the second device (1) purges said piping (3).
